Europäisches Patentamt

European Patent Office

Office européen des brevets

(19)

(11) Publication number: **0 078 781**
**A2**

(12) **EUROPEAN PATENT APPLICATION**

(21) Application number: **82850214.6**

(22) Date of filing: **29.10.82**

(51) Int. Cl.³: **B 60 C 11/14**

(30) Priority: **04.11.81 SE 8106523**
**16.12.81 SE 8107544**

(43) Date of publication of application: **11.05.83**
**Bulletin 83/19**

(84) Designated Contracting States: **AT BE CH DE FR GB IT
LI LU NL**

(71) Applicant: **Lindmark, Peter, Ramvägen 15,
S-902 40 Umeå (SE)**

(72) Inventor: **Lindmark, Peter, Ramvägen 15, S-902 40 Umeå
(SE)**

(74) Representative: **Onn, Thorsten et al, AB STOCKHOLMS
PATENTBYRA Box 3129, S-103 62 Stockholm (SE)**

(54) Anti-skid and ant-slide device for vehicle tires.

(57) An anti-skid and anti-slide device for vehicle tires
of the type comprising gripping members located in the
tire tread for engagement with the roadway.

In order to reduce the wear on the roadway and the
sound level in the vehicle compared to a.o. conventional
tire spikes, the gripping members (2) at the present anti-
skid and anti-slide device are capable upon their actuation
caused by skid or slide movement of the tire (1) relative
to the roadway to increase their projection for engagement with the roadway irrespective of the direction (A) of
said actuation.

## Anti-skid and anti-slide device for vehicle tires

This invention relates to an anti-skid and anti-slide device for vehicle tires, which comprises gripping members in the tread.

For protecting road-driving vehicles against skidding and sliding, substantially only tire spikes are used which consist of a cemented carbide pin serving as gripping member and a body of steel and/or plastic used as attachment member. The spike as gripping means has a small friction surface. Therefore, and because of the relatively rigid attachment of the spike in the tire, the cemented carbide pin of every spike exercises a high pressure on the roadway. This pressure, in combination with the impacts effected by every spike against the roadway, results in a heavy wear of both the roadway and the spike. Due to the rigid attachment of the spike, the spike pin also damages the surfacing by scratching movements caused by the deformation of the tire and its rubbing against the roadway. The small friction surface of the spike makes it necessary to provide a relatively great number of spikes in every tire. This great number, however, implies the disadvantage that, because of their low capacity of moving resiliently into the tire, the spikes absorb a great part of the load and thereby relieve the tire surface to a corresponding degree. The farther out from the tire the spikes project, the greater is the relieving effect, and the worse is the friction obtained against a snow-free roadway. The friction by metal on a snow-free roadway knowingly is inferior to the friction by rubber. A further diasdvantage is, that conventional spikes by their rigid attachment and low elasticity into the tire give rise to a relatively high sound level in the vehicle.

The present invention, therefore, has the object to produce an anti-skid and anti-slide device, which does not show the disadvantages of the tire spikes but, compared to both conventional and resilient tire spikes, causes considerably less wear on the roadway, lowers the sound level in the vehicle and improves the gripping power on snow-free as well as on ice- and snow-covered roadway, and has a long service life. The anti-skid and anti-slide device according to the invention. besides, shall be easy to mountin or on the tire.

This object is achieved in that the anti-skid and anti-slide device according to the invention has been given the characterizing features defined in the attached claims. According to the principles, on which the invention is based, the gripping members are arranged so as upon their actuation by the skid and/or slide movement of the tire relative to the roadway to increase their projection for engagement with the roadway, irrespective of the direction of their actuation.

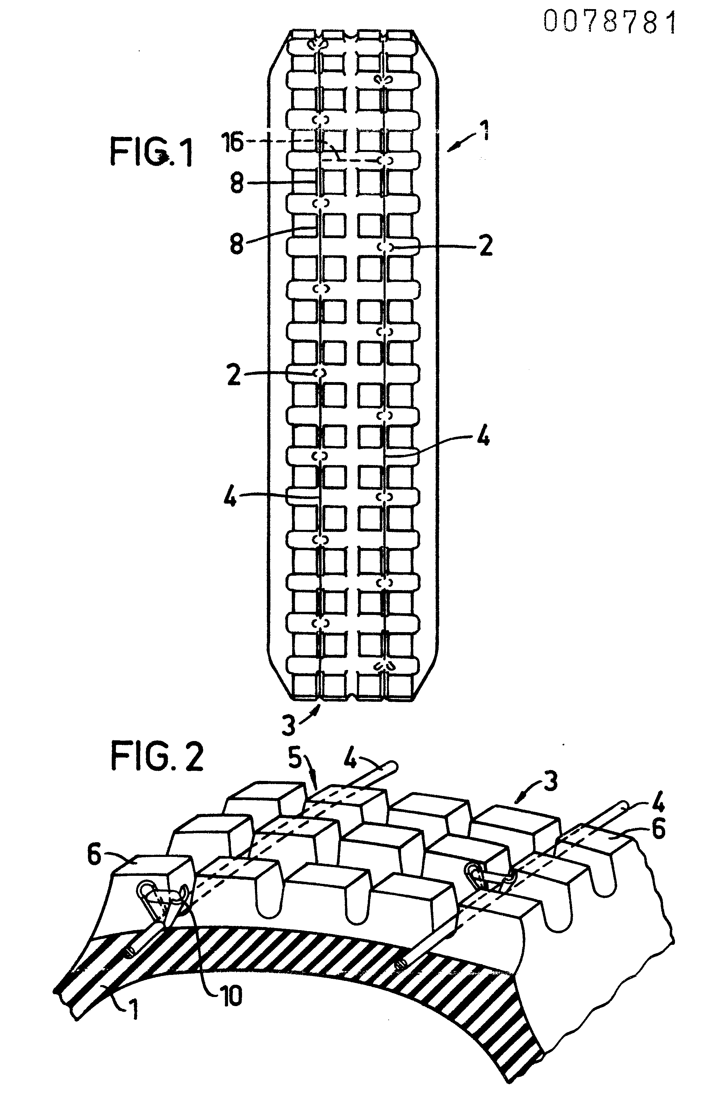

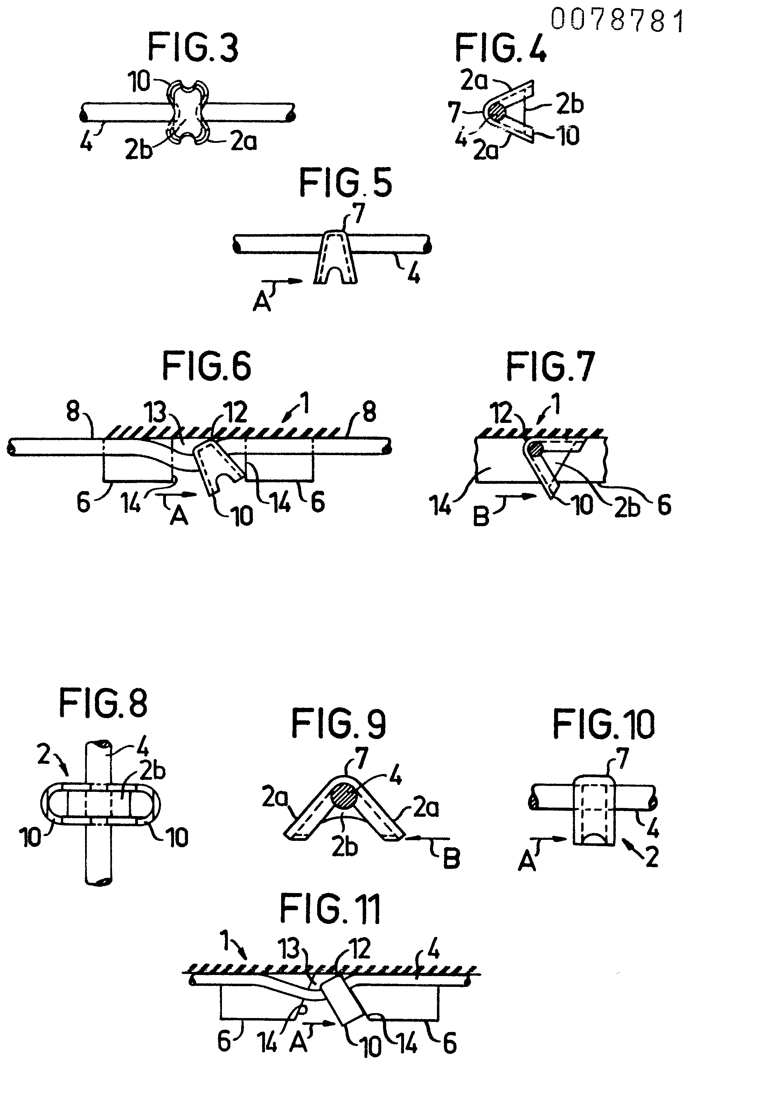

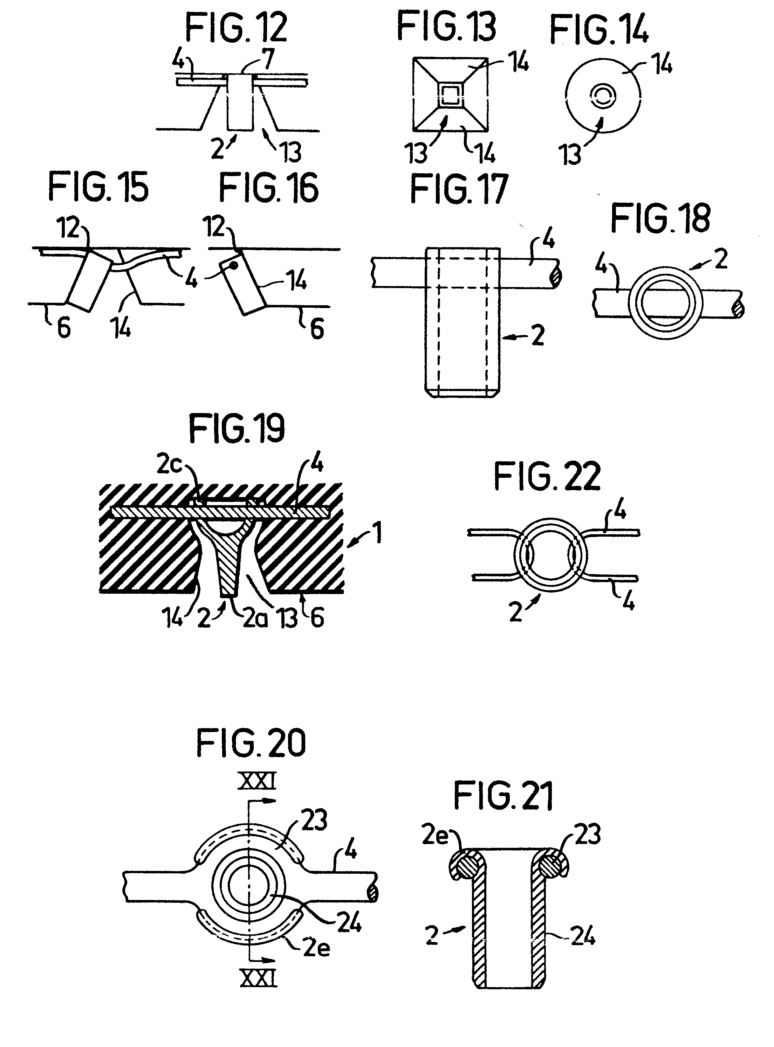

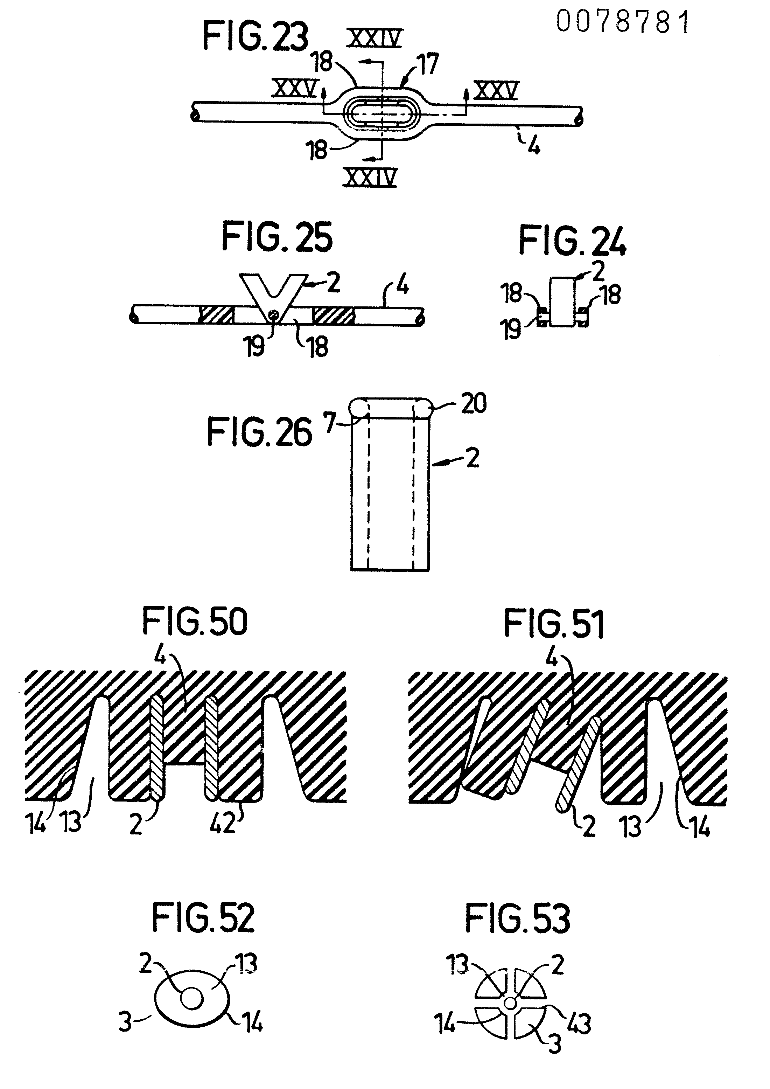

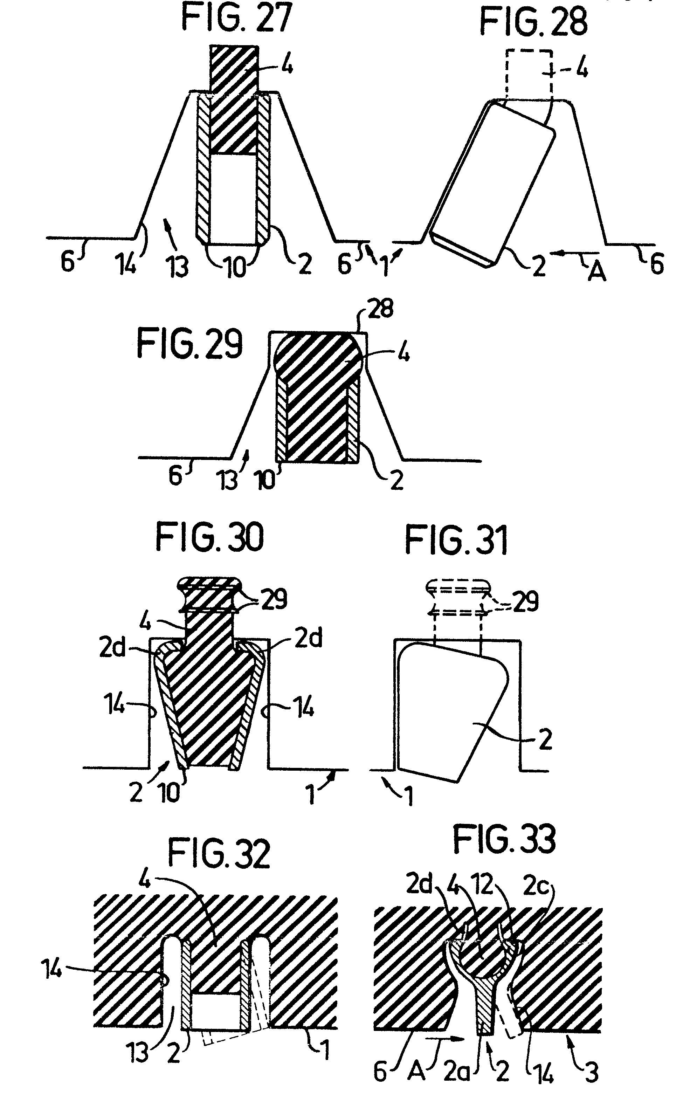

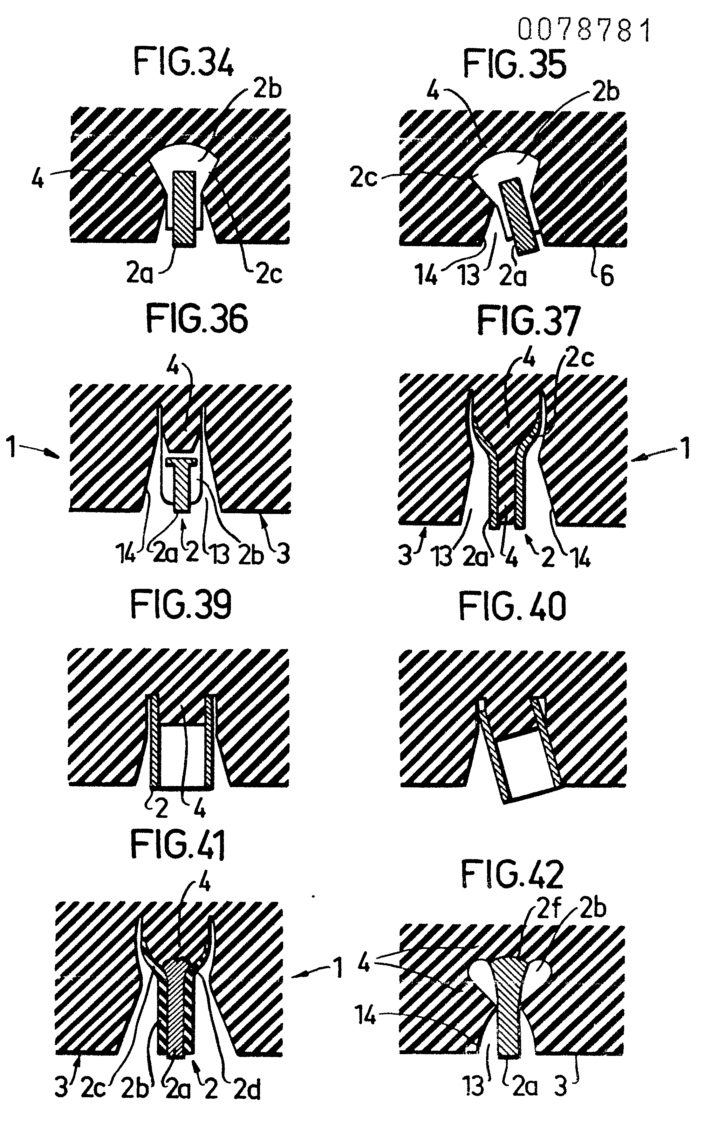

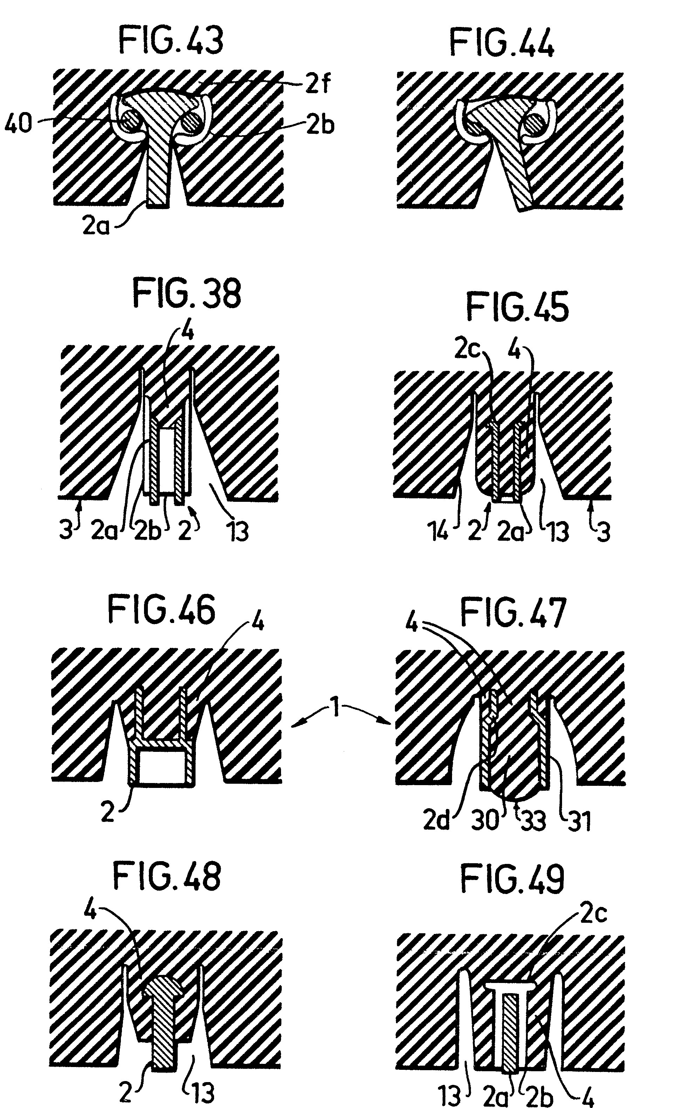

The invention is described in greater detail in the following, with reference to the accompanying drawings, in which Fig. 1 is a view of a vehicle tire provided with anti-skid and anti-slide device according to the invention, Fig. 2 shows on an enlarged scale a section of the tire in Fig. 1, Figs. 3, 4 and 5 are a horizontal view, end view and lateral view, respectively. of an embodiment of a gripping member shown in Fig. 2 comprised in the anti-skid and anti-slide device, Figs. 6 and 7 illustrate the gripping member according to Figs. 3-5 in different positions of engagement, Figs. 8, 9 and 10 are a horizontal view, end view and lateral view, respectively, of a slightly modified embodiment of the gripping member according to Figs. 3-5, Fig. 11 shows the gripping member according to Figs. 8-10 in a position of engagement, Fig. 12 is a lateral view of a further embodiment of the gripping member, with the carrying member located in a cavity or depression in the tire, Figs. 13 and 14 show two different forms of such a depression, Figs. 15 and 16 show the gripping memb-
er according to Fig. 12 in two different positions of engagement in its depression, Fig. 17 is a lateral view of
an embodiment of the gripping member located on its carrying member, Fig. 18 is an end view of the gripping member
in Fig. 17, Fig. 19 is a section through a modified embodiment of the gripping member with carrying member, Fig. 20
is a horizontal view of a further embodiment of a gripping
member and its carrying member, Fig. 21 is a section
along the line XXI-XXI in Fig. 20, Fig. 22 is a horizontal view of a modified carrying member with a cylindric
gripping member, Fig. 23 is a horizontal view of a further
embodiment of the carrying member with a V-shaped gripping
member, Fig. 24 is a section along the line XXIV-XXIV in
Fig. 23, Fig. 25 is a section along the line XXV-XXV in
Fig. 23, Fig. 26 is a lateral view of a gripping member
provided with resilient cushion, Figs. 27 and 28 are a
section through an embodiment of a pin-shaped carrying
member provided with a cylindric gripping member in equilibrium or neutral position and, respectively, engagement
position, Fig. 29 is a section through a modified embodiment of the pin-shaped carrying member in Fig. 27, Figs. 30
and 31 are a section through a further embodiment of the
gripping member and its carrying member in equilibrium
or neutral position and respectively, engagement position,
Fig. 32 is a section of an ambodiment with a cylindric
gripping member located in a cylindric depression, indicated in equlibrium or neutral position by fully drawn lines
and in engagement position by dashed lines, Fig. 33 is a
section through a further embodiment of a gripping member
comprised in the anti-skid and anti-slide device according to the invention and located on a substantially pin-
-shaped carrying member, illustrated in an equilibrium
position by fully drawn lines and in a position of engagement by dashed lines, Figs. 34 and 35 are a section of a
gripping member, which is secured by clamping or pressing
in its carrying member, in equilibrium and, respectively,
engagement position, Figs. 36-40 are sections of different
embodiments of the gripping member, carrying member and
depression in equilibrium position, but Fig. 40 showing
the gripping member in Fig. 39 in engagement position,
Figs. 41 and 42 are sections of a gripping member with a
pin portion movable relative to the body of the gripping
member, Figs. 43 and 44 are sections of a modified embodiment of a gripping member with movable pin pprtion in
equilibrium and, respectively, engagement position, Figs.
45-47 are sections of different alternative embodiments
of the cylindric gripping member and its attachment in a
pin-shaped carrying member, Fig. 48 is a section of a
gripping member secured by clamping or pressing in its
carrying member, Fig. 49 is a section of an embodiment
with a conventional tire spike as gripping member attached
in a carrying member with circular cross-section, Figs.
50 and 51 are sections of a cylindric gripping member,
which internally is attached to its pin-shaped carrying
member and is enclosed by a cylindric support collar,
Fig. 52 is a front view of a depression of ellipse-shaped
cross-section with a gripping member, and Fig. 53, finally, shows an example of how the tread can be designed
about a gripping member according to the invention.

In Fig. 1 a vehicle tire 1 is shown provided with an
anti-skid and anti-slide device according to the present
invention. This device comprises a plurality of gripping
members 2 for engagement with the roadway, when demanded,
and carrying members 4 carrying the gripping members 2
in the patterned tread 3 of the tire. The carrying members
4 may have a great variety of different forms and consist
of many different materials of elastic nature, for example
rubber and certain plastics, reinforced or not reinforced, and of more or less unelastic nature, for example steel,
preferably spring steel, or combinations of such materials. The carrying members 4 may, but must not be integral
of the same material, but may be composed of several sections or elements, which have different configurations relative to each other and consist of different materials or
combinations of materials, or every carrying member may
consist of one carrying element of elastic or unelastic
material. As an example can be mentioned that the carrying
members 4 may comprise sections of, or may be formed entirely of steel, preferably spring steel, rubber and/or
plastic in the form of metal threads, thin strips, wires
or the like, with a short or long extension, and extending differently over the tread, for example diagonally,
transversely or longitudinally, and be endless or capable
to be coupled together to form an endless loop, which may
include springs.

At the embodiment shown in Figs. 1 and 2 every carrying
member 4 is an endless rubber cord, which is located in
a groove 5 in the tire which extends all about the tire,
or in a relatively narrow slit in the tire, and is applied
with its gripping members 2 directly on the tire 1, preferably in uninflated state of the tire, in order thereafter to additionally be clamped by inflating the tire to
the tire pressure intended. Carrying members 4 of this
type also can be applied directly on an inflated tire.
Every gripping member 2 carried by a rubber cord is connected to its rubber cord in one way or another, so that
owing to the elasticity of the rubber cord the gripping
member is permitted to turn and/or assume inclined positi-
ion as soon as the gripping member is subjected to an
external force, which originates from a slide and/or skid
movement between the tire and the roadway. When being
turned or inclined, the gripping member 2 increases its
projecting portion from the tread of the tire and thereby increases its engagement with the roadway.

At this type of carrying members 4 the gripping members 2 normally are rigidly attached to their carrying members 4 so that they cannot move relative thereto, but this type of carrying member 4, which extends substantially in parallel with the end surface 10 of the gripping member facing to the roadway (see for example Figs. 3-11)must be movable relative to the tire, in any case in the area about the gripping member. Such longitudinally attached carrying members 4, which have circular cross-section along their entire length and carry gripping members 2 with a round end surface 7 facing to the tire (Figs. 3-11),can advantageously be joined with the tire in points 8 (Figs. 1 and 6), which are located spaced from a gripping member 2. Such point or spot anchoring of the carrying members 4 in the tire, for example by glueing, vulcanization or in some other way suitable per se, prevents undesired torsional turning of the carrying members 4 and their gripping members 2.

In Figs. 2-11 gripping members 2 with blunt V-shape or cone shape are shown,which have a rounded base or narrow end 7, by which the respective gripping member is intended to abut the tire, and have two substantially equally long legs 2a, which have arc-shaped cross-section (Figs. 2,3 and 8) and have two or four end surfaces 10 located in the same plane and acting as gripping surfaces. The rounded base 7 and legs 2a of the gripping member are formed of the same material, which is a wear-resistant material, for example hardened steel, cemented carbide or corresponding material. Between the legs 2a a relatively softer material is cast-in as a body or support filling 2b, which provides support to the legs 2a and increases the strength of the gripping member. Said body 2b can be designed in different ways, as exemplified in Figs. 4 and 9.

This type of gripping member 2 can be anchored at its carrying member 4 in many different ways, for example by vulcanization, glueing, clamping of the legs 2a of the gripping member about the carrying member 4, or casting-in by the softer material 2b.

When applied to a tire 1, every gripping member 2 of the type shown in Figs. 3-11 abuts with its base 7 the tire and is retained in position by the carrying member 4. In unactuated or normal state, every gripping member 2 projects from the tire surface 8 insignificantly or very little. The roadway, therefore, is not exposed to any appreciable wear. Under normal conditions when so to speak the rotation of the wheel is in phase with the roadway, i.e. when the wheel neither skids nor slides against the roadway, the gripping members owing to the elasticity of their carrying members adapt to the roadway.

As soon as the wheel at forward or rearward driving commences to skid relative to the roadway or at braking starts to slide, the gripping member 2 is caused to increase its engagement with the roadway and thereby is exposed to a force A (Figs. 5,6,10 and 11) in the longitudinal direction of the carrying member. Said force effects the gripping member 2 to be inclined or turned about a point 12 and thereby the projection of the gripping member is increased for engagement with the roadway. This inclination or turning of the gripping member 2 is rendered possible by the elasticity of the carrying member. As appears from especially Figs. 6 and 11 every gripping member 2 preferably is so placed in a cavity or depression 13 in the tire 1, that the side faces 14 of the depression define the inclination of the gripping member.

When skid movement arises so that the wheel skids only in lateral direction, one leg 2a of the gripping member engages with the roadway and thereby is exposed to a force B (Figs. 7 and 9), which is substantially perpendicular to the longitudinal direction of the carrying member. This force effects the gripping member 2 to be turned together with its carrying member 4. Thereby increases also the projection of the gripping member for engagement with the roadway. The turning movement of the gripping member is limited by the second leg of the gripping member getting into contact with the tire, as appears from Fig. 7. Upon ceasing of the forces A and B, the carrying member restores the normal position or equilibrium position of the gripping member 2.

It is also possible within the scope of the invention to provide transverse carrying members between the longitudinal carrying members 4 shown in Fig. 1. The transverse carrying members are indicated by dashed lines in Fig. 1 and are provided with gripping members of the type described which, thus, are located turned through $90^\circ$ in relation to the gripping members 2 of the longitudinal carrying members. Such a combination of gripping members renders it possible to arrange gripping members in several lines of engagement. It also implies that the aforesaid undesired torsional turning cannot occur, which means that the carrying members 4 of the circular type must not be anchored, either, at the tire.

In Fig. 12 another embodiment of a gripping member 2 is shown in unactuated or normal state. The gripping member may have, for example, square, polygonal or circular cross-section and is provided at its base surface 7 facing toward the tire with a through hole, through which the carrying member 4 extends. This gripping member can be rigidly connected to its carrying member 4, but may also be located loosely thereon.

This type of gripping member 2 is intended to be placed in a cavity or depression 13 in the tire and may have pyramid form as shown in Fig. 13 or cone form as shown in Fig. 14. The depression may also have another form, for example cylindric. The side faces 14 of the depression have the object to provide support to the gripping member at its engagement with the roadway and define the turning and inclination of the gripping member, as appears from Figs. 15 and 16, which show a gripping member 2 in position of engagement at the skidding of the tire in the longitudinal and, respectively, transverse direction of the carrying member.

The gripping member 2 at the embodiment shown in Figs. 17 and 18 is cylindric and intended to be placed, for example, in a conic or cylindric depression 13, while Fig. 19 shows a gripping member with a solid pin portion 2a and a wider base portion or attachment portion 2c, which is formed integral with the pin portion 2a. The form of the depression can be varied and, as shown in Fig. 19, the depression may be conic along one portion and cylindric along another portion or have another suitable form.

The gripping member 2 at the embodiment shown in Figs. 20 and 21 is joined with its carrying member 4 by a portion 23 formed as a ring in the carrying member 4, which portion encloses the cylindric portion 24 of the gripping member and is partially enclosed by attachment flanges 2e extending from the cylindric portion 24 and directed outward,

In Fig. 22 a cylindric gripping member 2 is shown applied on a carrying member 4 comprising double strands.

In Figs. 23-25 an elastic carrying member 4 is shown, which comprises for every gripping member 2 an oblong annular portion 17, in which a conic or V-shaped gripping member 2 is pivotally attached by means of an axle 19 attached in parallel sidepieces 18 of said portion.

The projecting length of the gripping member in unactuated state can be greater than mentioned above, without therefore increasing the wear on the gripping member and roadway. For this purpose a special rubber cushion can be provided at the base surface 7 of the gripping member.

In Fig. 26 such an embodiment is shown where a rubber cushion 20 in the form of a ring of relatively soft rubber is applied on the base surface 7 of a cylindric gripping member.

It also is possible according to the invention that the carrying member 4 is entirely or partially attached to the base surface 7 of the gripping member. The carrying member 4 here is located between the gripping member 2 and the tire 1. When the carrying member is made of an elastic material such as rubber, it will act as a resilient element, which permits the gripping member 2 to additionally spring inward at ground contact. Such inward springing effect also is achieved with a carrying member of the type described below which is oriented substantially radially or located in a radial plane.

The carrying member 4, as mentioned, can be a steel thread, a thin steel strip or a steel wire, but under the prerequisite condition that the carrying member permits its bending by the gripping member 2 in the way as shown, for example, in Figs. 6 and 13.

For rendering it possible that a carrying member in the form of a steel strip or wire can bend in the way intended, the carrying member must be permitted to move relative to the tire, so that the gripping member 2 upon its engagement with the roadway can slightly pull out the carrying member from the tire. That also a wire tightened about the tire can be pulled out from the tire, is due to the fact, that one or several gripping members not being engaged are caused to spring inward to the tire by tensile forces arising at the inclination of the gripping members, and also because these forces to some extent pull the carrying member into the tire. In order to reduce or to entirely prevent such pulling of gripping members and/or carrying members into the tire, the carrying member can comprise one or several extensible or tensile elements such as, for example, helically shaped steel springs or rubber springs.

When the carrying member is entirely unelastic, it is advantageous that the gripping members are movable in the longitudinal direction of the carrying member, because otherwise the carrying member will tend to move the other gripping members 2 located on the carrying member. It is also advantageous to use gripping members with a large base surface 7, which prevents the gripping members from turning about the carrying member, but permits the carrying member to turn relative to the gripping member.

The carrying member 4 comprised in the anti-skid and anti-slide device according to the invention is not required to be arranged transversely, diagonally or longitudinally, but may, as shown in greater detail in Figs. 27-51, have the form of a pin, a cavity or the like with substantially radial extension or lying in a radial plane. This type of carrying member carries each one gripping member 2 and consists of elastic material, for example, rubber. The gripping member 2 may be cylindric, conic (its smaller or larger end surface facing to the tire), parallelepipedic or it may have a combination of these forms and also other forms.

This carrying member 4, like the carrying members at the embodiments already described, may have a different form and extension and may be designed integral with the tire or with a strip-shaped longitudinal carrying member or be joined with such a carrying member of the same material as the carrying member itself or of another material, for example steel. The carrying member 4 also can be joined with the tire by glueing in a hole in the tire (Figs. 27, 28) or against a plane surface 28 (Fig. 29). At the embodiment according to Figs. 30 and 31 the elastic carrying member 4 is attached with reinforcements in the tire in principle in the same way as a conventional tire spike.

In Figs. 32-42 the gripping member is shown joined with a carrying member 4 designed integral with the tire or the tread thereof.

The gripping member 2 can be joined with the carrying member 4 by glueing, vulcanization and/or clamping or in some other way. When it is applied by vulcanization, the gripping member can be vulcanized simultanously wit the vulcanization/formation of the tread by being laid in the mould.

The cavity about the gripping member 2, as appears from the Figures,can have various forms, for example be cylindric or cone-shaped or have a combination of these and other forms.

In the same way as the afore-described diagonal, transverse or longitudinal carrying member, the carrying member 4 which is radially oriented or located in a radial plane permits by its elasticity the gripping member to turn and/or assume inclined position in its cavity when it is exposed to a force A from outside, which originates from a skid and/or slide movement between tire and roadway. When the gripping member 2 is inclined or turned, its projection from the tread 3 of the tire increases, and the gripping member thereby increases its engagement with the roadway, irrespective of the direction of the force A required for causing the gripping member 2 to assume inclined position. The cavity 13, in which the gripping member is located, defines by its sidewalls 14 the inclination of the gripping member, as shown for example in Figs. 28 and 32. It may be said with other words, that every gripping member 2 is so arranged on or in its carrying member 4, that upon its actuation caused by a skid or slide movement of the tire 1 in relation to the roadway the gripping member increases its projection by being inclined and/or turned in its cavity 12 for engagement with the roadway, irrespective of the direction of the actuation.

Fig. 27 shows a hollow-cylindric gripping member on a carrying pin 4 applied in its cylindric portion. Said carrying pin, as mentioned above, can be designed integral with the tire. In Fig. 27 is shown that the carrying member 4 is joined with the tire in a hole therein.

Fig. 28 shows said gripping member in position of engagement, in which the gripping member abuts the sidewall of the conic cavity.

In Fig. 29 a gripping member is shown, which is carried by a carrying member 4 of a modified form. The carrying member here is joined with the tire, for example by glueing against a plane surface 28. The cavity, in which the gripping member is located, can be conic along a portion of its length and cylindric along another portion of its length, as shown in Fig. 29.

In Fig. 30 a conic gripping member is shown which is carried by a carrying member 4 in a cylindric depression. This gripping member can be joined with its carrying member by being pressed thereon, and the gripping member is retained in place by its inward facing surfaces or its attachment flange 2d. In Fig. 31 this gripping member is shown in a position of engagement.

The gripping member 2 according to Fig. 32 is cylindric, and its pin-shaped carrying member 4 is designed integral with the tire. In this Figure the gripping member 2 is indicated by dashed lines in an engagement of position, in which it rests against the wall 14 of the cylindric cavity.

The gripping member 2 according to Fig. 33 consists of a solid pin portion 2a and a hollow attachment portion 2c, which faces toward the tire and has a greater width than the pin portion 2a of the gripping member. The hollow attachment portion 2c is joined with the carrying member 4 for example by glueing. This gripping member, like the gripping member in Figs. 30 and 31, may also be pressed on the carrying member 4 and be retained in place by its inward facing surfaces or its inward facing attachment flange 2d.

In Fig. 33 the gripping member 2 is indicated by dashed lines when it is exposed to a force A. The gripping member 2 is caused thereby to turn about a point 12, and the gripping member thereby increases its projection for engagement with the roadway. In a position of engagement the gripping member 2 abuts the sidewall of the cavity, which by its elasticity permits an additional turning and/or inclination of the gripping member 2. Upon ceasing of the force A, the carrying member tends again to return the gripping member to its radial normal position or equilibrium position.

In Fig. 34 a gripping member 2 is shown which has similar external outlines as the gripping member shown in Fig. 33. At the embodiment according to Fig. 34, however, the attachment portion 2c of the gripping member is enclosed strongly by the carrying member 4, which is formed as a cavity in the tire, in which the gripping member is secured by pressing.

The gripping member shown in Fig. 34 has a body 2b of a softer material and a pin portion 2a of a harder material than the body, for example cemented carbide. The body is attached in the carrying member by clamping. At the clamping, the body of the gripping member, which in the example shown has conic shape, but may have other shapes, for example ball shape, is retained in place in the carrying member 4 by outward facing surfaces or an attachment flange 2c. In a position of engagement the gripping member 2 rests against the conic walls of the cavity which extend about the gripping member 2. When skidding and/or sliding against the support has ceased, the gripping member 2 is returned by its elastic carrying member 4.

In Fig. 35 a further gripping member is shown which has a pin portion 2a and a body 2b, which is secured on the carrying member 4 by glueing or vulcanization.

In Fig. 37 a gripping member is shown, which consists
of a hollow-cylindric pin portion 2a and wider attach-
ment portion 2c facing to the tire. The carrying member 4
here is designed integral with the tire, and the gripping
member 2 can be joined with its carrying member 4, for
example, by glueing or vulcanization. In the latter case
the gripping member preferably is laid into the mould and
vulcanized simultaneously as the tread and the carrying
members are vulcanized/formed.

It applies to all gripping members described and shown
that the cavity about every gripping member, as mentioned
before, can have various forms. With reference to Fig. 37,
for example, can be mentioned that the cavity about the
gripping member shown in said Figure also can be conic or
cylindric along its entire length. The distance from the
gripping member 2 to the rubber defining the cavity can
be longer or shorter than the distance shown in said Fig-
ure. Seen in a plane through and in parallel with the
free outward facing end surface 10 of the gripping member,
the distance from the gripping member 2 in its normal equil-
ibrium or inactive position to the rubber defining the
cavity can be the same or varying about the gripping member 2 (see Figs. 6,7,13,14 and 52).

Fig. 38 shows an embodiment, at which the gripping member
2 consists of a hollow-cylindric pin portion 2a and a body
2b of a softer material in and about the hollow-cylindric
pin portion.

In Figs. 39 and 40 a hollow-cylindric gripping member 2 is
shown which is slightly higher than the one shown in Fig.
38 and can be attached to its carrying member 4 inwardly
and/or outwardly. The gripping member preferably is attached to the carrying member only inwardly. In such a case
the carrying member has the form of a pin.

In Fig. 41 an embodiment of the gripping member is illustrated which comprises a solid pin portion 2a of cemented carbide, which is located in a hollow-cylindric body 2b. This body can be of a material with the same wear resistance as the material in the pin or of a softer or a harder material than in the pin. The body 2b is formed with a wider attachment portion 2c, by which the gripping member 2 is joined with its carrying member 4. The pin portion 2a is movable relative to its body 2b and, thus, can spring into the elastic carrying member 4 with its base portion 2f, which is wider than the pin portion in general for retaining the same in the body 2b. The pin portion 2a penetrates into the snow or ice cover on the roadway and thereby contributes to positioning the gripping member inclined, whereby also the body is caused to engage with the roadway.

At the embodiment according to Fig. 42 the pin portion 2a of the gripping member is movable relative to its body 2b in the same way as the pin portion in the gripping member shown in Fig. 41 and, thus, can spring with its base portion 2f into the carrying member 4, which tightly encloses the body 2b of the gripping member and retains it. The gripping member according to Fig. 42 in general has the same function and attachment as the embodiment according to Figs. 34 and 35, but is shown located in a conic cavity with walls 14 of concave curvature.

Figs. 43 and 44 also show embodiments of the present gripping member 2 with a pin portion 2a movable relative to the body 2b, which pin portion, however, differs from the embodiments according to Figs. 41 and 42 in that the pin portion 2a can be inclined without the body 2b having to be inclined. This is achieved in that between the base portion 2f of the pin portion and the cup-shaped body 2b a filling 30 of elastic material is located. This filling can have the form of a rubber ring 40 and should in comparison to the tire rubber have such elasticity, that the pin portion 2a upon being exposed to actuation by a skid and/
or slide movement to a position of engagement (see Fig.
44) on first hand compresses the rubber ring 40 and not
the tire rubber surrounding the base portion 2f of the
pin. This ring 40 also has certain similarities with the
annular portion 23 comprised in the embodiments according
to Figs. 20 and 21.

Fig. 45 illustrates a possible attachment of a gripping
member 2 in the form of a hollow-cylindric pin portion 2a
with external attachment flange 2e. Here the carrying
member 4 encloses the greater part of the gripping member
both externally and internally. This gripping member can
be joined with its carrying member 4 by glueing, vulcan-
ization and/or clamping.

Fig. 46 shows a cone-shaped carrying member 4, in which a
gripping member 2 with a hollow-cylindric attachment portion is attached by glueing or vulcanization.

As shown in Figs. 47 and 27 and other Figures, the elastic
material also may constitute a core 30 in the gripping
member, which here has the form of a casing 31 of hardened
steel, cemented carbide or similar material enclosing the
core 30. The core 30, as shown a.o. in Fig. 23, may be located flushing with the end surfaces 10 of the gripping
member or, as shown in Fig. 47, project slightly outside
the end surfaces 10 of the gripping member and may be provided in its end surface 33 with means increasing the
friction against the roadway, which increase the initial
actuation of the gripping member 2 for its inclination or
turning in order to increase the engagement with the roadway as soon as a skid and/or slide movement commences.
The core 30 may be reinforced and/or provided with thin
steel threads, brush, pins, small grains and the like as
means increasing the friction.

In Figs. 48 and 49 some additional imaginable forms of
gripping members, carrying members and depressions within the scope of the present invention are illustrated.

In Figs. 50 and 51 a gripping member 2 is shown in neutral and, respectively, engagement position. The gripping member is surrounded by a cylindric rubber casing 42, which is separate from the gripping member 2 proper, i.e. is not joined with the same, and which acts as a support for the gripping member 2 and as an extra means for returning the gripping member from the position of engagement shown in Fig. 51 to the neutral position shown in Fig. 50. This embodiment differs in principle, for example, from the embodiment shown in Fig. 45 only in that there is no external connection between the carrying member 4 and the gripping member. It also is possible to provide several such rubber casings or support collars 42 concentrically one outside the other and with intermediate spaces 13 relative to each other, which together form the cavity 13 about the gripping member. The support collars 42 formed concentrically about the gripping member, thus, rest one against the other and co-operate with each other for providing the gripping member 2 with the necessary support in its position of engagement.

In Fig. 52 a cavity with elliptic cross-section is shown, the wall of which shows a varying distance to the gripping member in the case when this is, for example, circular.

Fig. 53 illustrates, finally, that the cavity 13 about a gripping member 2, which is carried by a substantially radial carrying member 4, not necessarily must be a closed cavity, but may include in its walls grooves 43 with varying width and direction.

It is according to this invention also possible to arrange the different gripping members according to Figs. 1-26 each on a substantially radial carrying member 4 and the different gripping members according to Figs. 27-51 in their turn on carrying members extending longitudinally,

0078781

transversely or diagonally. All carrying members, furthermore, may be broken in their outward facing end surface
10 and be formed with long or short teeth and with intermediate spaces or recesses between the teeth.

The present invention is not restricted to what is described above and shown in the drawings, but can be altered,
modified and combined in many different ways within the
scope of the invention idea defined in the attached claims.

Claims

1.    An anti-skid and anti-slide device for vehicle tires with gripping members in the tire tread, c h a r a c t e r- i z e d   i n   that the gripping members (2) upon actuation caused by a skid or slide movement of the tire (1) relative to the roadway increase their projection for engagement with the roadway irrespective of the direction of the actuation.

2.    An anti-skid and anti-slide device as defined in claim 1, c h a r a c t e r i z e d   i n   that every gripping member (2) is carried by a carrying member (4) in a cavity (13) located in the tire tread, which cavity is defined by a surface (14), which encloses the gripping member (2) and extending all about the same is spaced from the gripping member in its normal, relatively inactive starting position and without impeding effect on the gripping member (2) permits it upon actuation caused by a skid or slide movement to move from said starting position to an active engagement position, in which said wall (14) of the cavity constitutes a support for the gripping member, and in which the gripping member (2) by said movement has increased its projection for engagement with the roadway.

3.    An anti-skid and anti-slide device as defined in claim 2, c h a r a c t e r i z e d   i n   that the cavity (13) including a gripping member (2) has a cross-sectional area, which is greater at the periphery of the tire than at the bottom of the cavity.

4.    An anti-skid and anti-slide device as defined in claim 2 or 3, c h a r a c t e r i z e d   i n   that, seen in a plane through and in parallel with the free outward facing end surface (10) of the gripping member, the distance from the gripping member (2) in its normal starting position to the rubber surface (14) defining the cavity is the same or varies about the gripping member (2).

5. An anti-skid and anti-slide device as defined in any one of the claims 2-4, c h a r a c t e r i z e d   i n that the cavity (13) is conic and/or cylindric.

6. An anti-skid and anti-slide device as defined in any one of the preceding claims, c h a r a c t e r i z e d i n   that the gripping members (2) comprise a pin portion (2a) for engagement with the roadway. which portion has circular hollow or solid cross-section.

7. An anti-skid and anti-slide device as defined in claim 5, c h a r a c t e r i z e d   i n   that the pin portion (2a) of the gripping member has a cross-sectional area, which is substantially the same along at least a portion of the length of the gripping member.

8. An anti-skid and anti-slide device as defined in any one of the claims 2-7, c h a r a c t e r i z e d   i n that the gripping member (2) is joined with its carrying member (4) of rubber in that rubber is located within and/ or on the outside of the gripping member (2) along at least a portion of its length.

9. An anti-skid and anti-slide device as defined in any one of the claims 2-8, at which the carrying member consists of rubber, c h a r a c t e r i z e d   i n   that the gripping member (2) is glued, vulcanized and/or pressed on or into the rubber in the carrying member (4).

10. An anti-skid and anti-slide device as defined in any one of the claims 6-9, c h a r a c t e r i z e d   i n that the gripping member (2) comprises in addition to the pin portion (2a) a body (2b), which is located in and/or about the pin portion (2a) and consists of a softer material than the pin portion.

11. An anti-skid and anti-slide device as defined in claim 10, c h a r a c t e r i z e d   i n   that the pin portion (2a) is movable in its body (2b).

0078781

12.    An anti-skid and anti-slide device as defined in
any one of the claims 2-11, c h a r a c t e r i z e d
i n    that the elastic carrying members (4) of the gripp-
ing members are arranged on the tire radially, lying in
a radial plane, longitudinally, diagonally or transversely.

13.    An anti-skid and anti-slide device as defined in
any one of the claims 2-12, c h a r a c t e r i z e d
i n    that the carrying members (4) of the gripping members are formed integral with the tire (1).

FIG.1

16
8
8
2
2
4
4

1

2

4

3

FIG.2

5    4
6        4
6            6

1    10

0078781

FIG.3

FIG.4

FIG.5

FIG.6

FIG.7

FIG.8

FIG.9

FIG.10

FIG.11

0078781

**FIG.12**

**FIG.13**

**FIG.14**

**FIG.15**

**FIG.16**

**FIG.17**

**FIG.18**

**FIG.19**

**FIG.22**

**FIG.20**

**FIG.21**

FIG. 23

FIG. 25

FIG. 24

FIG. 26

FIG. 50

FIG. 51

FIG. 52

FIG. 53

0078781

FIG. 27

FIG. 28

FIG. 29

FIG. 30

FIG. 31

FIG. 32

FIG. 33

0078781

FIG.34

FIG.35

FIG.36

FIG.37

FIG.39

FIG.40

FIG.41

FIG.42

0078781

FIG.43

FIG.44

FIG.38

FIG.45

FIG.46

FIG.47

FIG.48

FIG.49